# EUROPÄISCHE PATENTSCHRIFT

(11) **EP 0 497 730 B1**
(45) Veröffentlichungstag und Bekanntmachung des Hinweises auf die Patenterteilung: **06.07.1994**
(21) Anmeldenummer: 92810022.1
(22) Anmeldetag: 15.01.1992
(51) Int. Cl.: B28D 1/04, B23D 47/02

(54) **Führungsschiene mit Stützbock für Wand- und Bodenfräsmaschinen**
Guide rail with abutment for wall and floor milling machines
Rail de guidage avec butée pour machines à fraiser le mur et le sol

(30) Priorität: 28.01.1991 CH 247/91
(43) Veröffentlichungstag der Anmeldung: 05.08.1992
(73) Patentinhaber: HYDROSTRESS AG, CH-8330 Pfäffikon (CH)
(72) Erfinder: Bieri, Hans, CH-8330 Pfäffikon (CH)
(74) Vertreter: Bosshard, Ernst

(56) Entgegenhaltungen:
- CH-A- 660 706
- DE-A- 3 423 390
- DE-U- 8 901 845
- US-A- 4 134 459
- US-A- 4 489 924

## Beschreibung

Die Erfindung bezieht sich auf eine Führungsschiene mit Stützbock für Wand- oder Bodenfräsmaschinen, wobei die Schiene mit Längsführungsorganen für den Fräsmaschinenkopf und mit einer Zahnstange versehen ist und die Schiene Mittel zur Verbindung mit mindestens einem Stützbock aufweist.

Aus der CH-PS 660 706 ist eine Führungsschiene für Wand- und Bodenfräsmaschinen der obengenannten Art bekannt, bei der die Stützböcke mit einem schrägen Stützteil in Bohrungen der Fünrungsschiene eingreifen. Eine derartige besonders starre Befestigung der Führungsschiene am Stütz - bock hat sich in der Praxis bewährt. Unbefriedigend ist jedoch, dass die Stützböcke nicht stufenlos in Schienenlängsrichtung verschoben werden können, beispielsweise um Bodenunebenheiten auszuweichen. Erst nach dem Abheben des Schienenstückes können die Stützböcke in eine andere der im Abstand voneinander in Schienenlängsrichtung angebrachten schrägen Bohrungen eingesetzt werden.

Aus DE-U-8 901 845 ist eine Vorrichtung zur Aufnahme und Führung eines Schlittens einer Betonsäge bekannt. Die Betonsäge wird dabei entlang einer flachen, geneigten Schiene geführt. Die Schiene wird ihrerseits von Stützfüssen auf einer Auflageschiene abgestützt. In die mit Führungsnuten versehenen Schmalseiten der flachen Schiene greifen Führungsräder des Schlittens ein. Unbefriedigend ist dabei, dass zwischen den Stützfüssen und dem Kreissägeblatt ein grosser seitlicher Abstand notwendig ist. Dieser Abstand ergibt infolge Hebelwirkung hohe Torsionskräfte auf die Schiene.

Mit der Erfindung soll die Aufgabe gelöst werden, bei einer für Wand- und Bodenfräsen mit durchmessergrossem Kreissägeblatt bestimmten Führungsschiene die Stützböcke in Schienenlängsrichtung verschieben zu können, wobei die Befestigung zwischen Schiene und Stützbock besonders kompakt und verwindungsfest sein soll und dem Ueberfahren der Fräsmaschine sowie dem Zusammenbau von Schienenteilstücken nicht hinderlich ist.

Diese Aufgabe wird dadurch gelöst, dass die Führungsschiene einstückig mit einem Schwalbenschwanzfuss versehen ist, welcher der Zahnstange diametral gegenüberliegt, auf dem Stützbock zwei den Schwalbenschwanzfuss hintergreifende Klemmschuhe, welche im Nicht-Klemmzustand in Schienenlängsrichtung verschiebbar sind und eine quer zur Schienenlängsrichtung verlaufende Schraube zum Spannen der Klemmschuhe vorhanden ist.

Durch den einstückig mit der Führungsschiene verbundenen Schienen-Fuss, in welche eine Klemmvorrichtung lösbar eingreift, ist eine stufenlose Längsverschiebung derselben längs der Schiene möglich. Diese Klemmverbindung ermöglicht zudem eine gedrungene Bauweise mit geringem seitlichem Abstand zwischen Stützböcken und Kreissägeblatt, sodass eine verwindungsfeste Uebertragung der Kräfte vom Fräskopf auf die Schiene und auf die Stützböcke möglich ist.

In der Zeichnung sind Ausführungsbeispiele des Erfindungsgegenstandes dargestellt. Es zeigen:
- Fig. 1: einen Schnitt durch die Führungsschiene mit Teilschnitt durch einen Stützbock
- Fig. 2: einen Schnitt durch die Führungsschiene und durch eine Ausführungsvariante des Stützbockes
- Fig. 3: eine Seitenansicht des Stützbockes nach Fig. 2

Die Führungsschiene 1 besteht vorzugsweise aus hochfestem Stahl und ist als aus einem Stück bestehendes, umfangsgeschlossenes Rohr- oder Kastenprofil ausgebildet.

Mehrere Teilstücke dieser Führungsschiene 1 lassen sich aneinanderreihen. Auf diese Führungsschiene 1 wird der Antriebskopf einer Wand- oder Bodenfräse mit üblicherweise grossem Kreissägeblatt aufgesetzt, wie dies aus der CH-PS 660 706 hervorgeht. Diese Fräseinrichtung dient zur Erzeugung von Schlitzen oder Trennschnitten in dicken Betonmauern, Gestein od.dgl. Zur Aufnahme von Gleitsteinen des Antriebskopfes der Fräsmaschine sind auf diametral gegenüberliegenden Seiten der Führungsschiene 1 in Längsrichtung verlaufende und in einer Horizontalebene liegende Führungsnuten 2 vorhanden. An Stelle von Nuten könnten auch dem gleichen Zweck dienende Längsrippen vorgesehen werden. Auf der Schienenoberseite befindet sich eine Zahnstange 3, die vorzugsweise in das Material des Schienenprofiles eingearbeitet ist - also mit der Schiene einen einstückigen, integralen Bestandteil bildet. Es ist indessen möglich die Zahnstange 3 als getrennten Bestandteil mit der Schiene 1 zu verbinden. Zur Aufnahme von Verbindungsorganen zwischen aneinanderzureihenden Schienenteilstücken ist die Führungsschiene 1 mit einer zentralen Bohrung 5 versehen.

Der Fuss der Führungsschiene 1 ist als Schwalbenschwanzfuss 6 ausgeführt und bildet mit dem Schienenmaterial ein einziges Stück. Dieser Schwalbenschwanzfuss 6 liegt der Zahnstange 3 diametral gegenüber. Mit dem Schwalbenschwanzfuss 6 wirkt eine Klemmvorrichtung 7 zusammen, die Teil eines Stützbockes 8 ist.

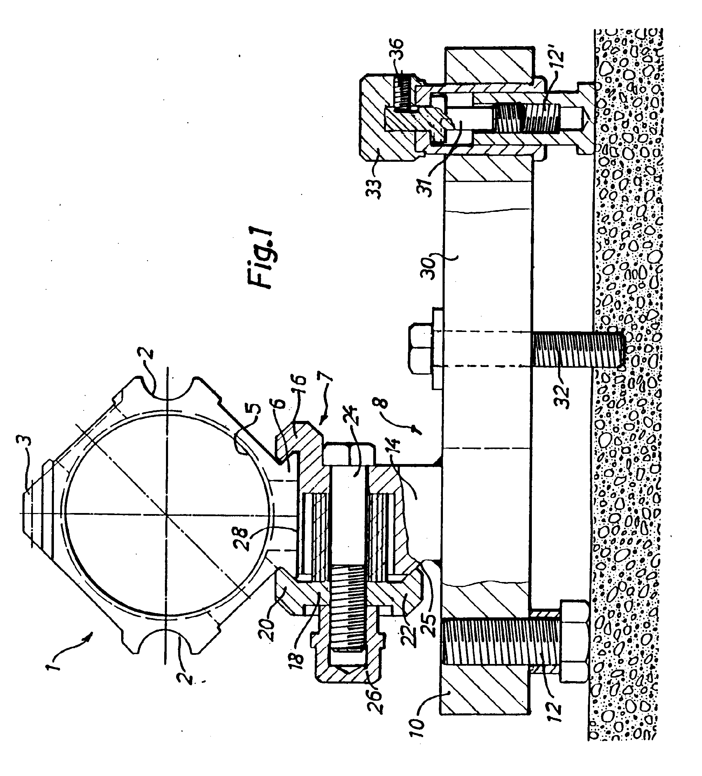

Der Stützbock 8 gemäss Fig. 1 enthält eine Fussplatte 10 mit mindestens zwei höhenverstellbaren Stellschrauben 12. An Stelle einer Platte könnte auch ein etwa U-förmiger Bügel od. dgl. verwendet werden. Auf der Fussplatte 10 ist ein Klemmbock 14 starr befestigt, beispielsweise durch Schweissnähte. Ein Schuh 16 des Klemmbockes 14 liegt mit seiner Schrägfläche gegen die eine Seite des Schwalbenschwanzfusses 6 an. Auf der gegenüberliegenden Seite des Schwalbenschwanzfusses befindet sich eine Klemmplatte 18, die mit ihrem oberen Klemmteil 20 gegen den Schwalbenschwanzfuss 6 drückt und mit ihrem unteren Stützteil 22 eine Schrägfläche 25 des Klemmbockes 14 hintergreift.Durch eine Schaftschraube 24 mit Gewindemutter 26 lässt sich diese Klemmvorrichtung 7 am Schwalbenschwanzfuss 6 festklemmen. Die Grundfläche des Schwalbenschwanzfusses 6 liegt dabei gegen eine ebene Gegenfläche 28 des Klemmbockes 14 an. Nach Lösen der Gewindemutter 26 lässt sich der Stützbock 8 relativ zur Führungsschiene 1 in deren Längsrichtung stufenlos verschieben.

Durch eine die Fussplatte 10 in einer Oeffnung 30 durchdringende Befestigungsschraube 32 wird der Stützbock 8 am Boden starr befestigt.

Eine Korrektur der Lage der Fussplatte 10 und damit der Lage der Führungsschiene 1 kann durch mindestens eine der in die Fussplatte 10 eingreifenden Stellschrauben 12 erfolgen. Mindestens die eine Stellschraube 12′ enthält eine Spindel 31, die durch eine Stiftschraube 36 fest mit einem von oben zugänglichen Betätigungsknopf 33 verbunden ist.

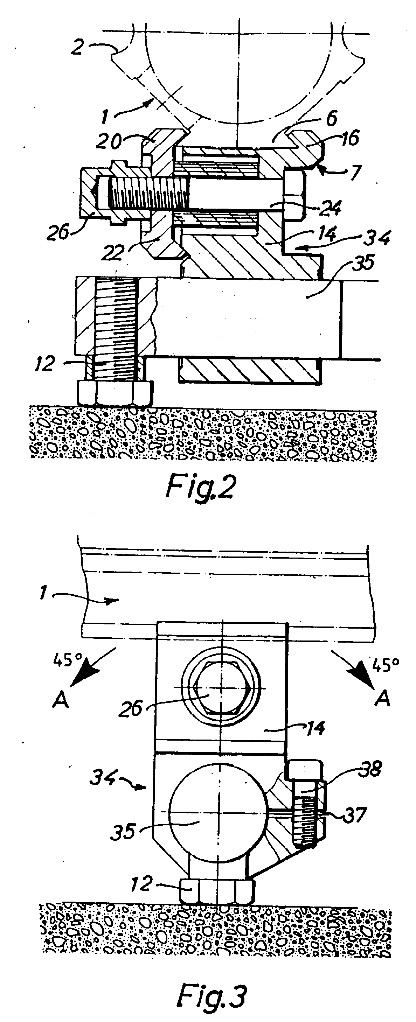

In den Fig. 2 und 3 ist eine Ausführungsvariante des Stützbockes 8 dargestellt. Der Klemmbock 34 sitzt hier statt auf einer Platte auf einer zylindrischen Stange 35. Im Bereich dieser Stange 35 ist der Klemmbock 34 mit einem Trennschlitz 37 versehen. Durch eine Schraube 38 kann der Schlitz 37 zusammengezogen und dadurch eine Klemmwirkung erzeugt werden. Dadurch ist es möglich, dass die Führungsschiene 1 in Axialrichtung verschiebbar und eine Schräglage bis zu etwa 45° beidseits der in Fig. 3 dargestellten Normalposition einnehmen kann, wie dies durch Pfeile A angedeutet ist. Im übrigen entspricht die Klemmvorrichtung 7 und die Führungsschiene 1 der in Fig. 1 erwähnten Ausführungsform.

Auf jedes Führungsschienen-Teilstück weiden üblicherweise mindestens zwei Stützböcke 8 aufgesetzt.

## Patentansprüche

1. Führungsschiene (1) mit Stützbock (8) für Wand- oder Bodenfräsmaschinen, wobei die rohrförmige Schiene (1) mit Längsführungsorganen (2) für den Fräsmaschinenkopf und mit einer Zahnstange (3) versehen ist und die Schiene Mittel zur Verbindung mit mindestens einem Stützbock (8) aufweist, dadurch gekennzeichnet, dass die Führungsschiene (1) einstückig mit einem Schwalbenschwanzfuss (6) versehen ist, welcher der Zahnstange (3) diametral gegenüberliegt, auf dem Stützbock (8) zwei den Schwalbenschwanzfuss (6) hintergreifende Klemmschuhe (16,20) welche im Nicht-Klemmzustand in Schienenlängsrichtung verschiebbar sind und eine quer zur Schienenlängsrichtung verlaufende Schraube (24,26) zum Spannen der Klemmschuhe (16,20) vorhanden ist.

2. Führungsschiene nach Anspruch 1, dadurch gekennzeichnet, dass der eine Klemmschuh (16) starr mit einem vom Stützbock (8) abragenden Klemmbock (14) verbunden ist und der andere, lose Klemmschuh (22) einen Ansatz (25) des Klemmbocks (14) hintergreift.

3. Führungsschiene nach Anspruch 1 oder 2, dadurch gekennzeichnet, dass der Klemmbock (14) axial verschiebbar, schwenkbar und feststellbar auf einer zylindrischen Stange (35) des Stützbockes (8) sitzt und die Stange (35) sich quer zur Längsrichtung der Führungsschiene (1) erstreckt.

4. Führungsschiene nach einem der Ansprüche 1 oder 2, dadurch gekennzeichnet, dass mindestens eine Stellschraube (12) des Stützbockes (8) mittels Gewindespindel (31) von der Oberseite des Stützbockes (8) her verstellbar ist.

## Claims

1. A guide rail (1) with a supporting pedestal (8) for wall or floor milling machines, the tubular rail (1) having longitudinal guide members (2) for the milling machine head and a rack (3), the rail having means for the connection of at least one supporting pedestal (8), characterised in that the guide rail (1) is provided with an integral dovetail base (6) diametrically opposite the rack (3) and in that there are on the supporting pedestal (8) and engaging behind the dovetail base (6) two clamping shoes (16, 20) which, in the non-clamping condition, are displaceable in the longitudinal direction of the rail, a screw (24, 26) extending crosswise to the longitudinal direction of the rail being provided for clamping the clamping shoes (16, 20).

2. A guide rail according to Claim 1, characterised in that one clamping shoe (16) is rigidly connected to a clamping support (14) projecting from the supporting pedestal (8), the other, loose clamping shoe (20) engaging behind a projection (25) on the clamping support (14).

3. A guide rail according to Claim 1 or 2, characterised in that the clamping support (14) is axially displaceable, pivotable and lockable on a cylindrical bar (35) of the supporting pedestal (8), the bar (35) extending crosswise to the longitudinal direction of the guide rail (1).

4. A guide rail according to one of Claims 1 or 2, characterised in that at least one set screw (12) of the supporting pedestal (8) can be adjusted from the top of the supporting pedestal (8) by means of a screw-threaded spindle (31).

## Revendications

1. Rail de guidage (1) avec support d'appui (8) pour machines à fraiser les murs ou le sol, le rail qui est en forme de tube (1) étant muni d'organes de guidage longitudinal (2) pour la tête de la fraiseuse et d'une crémaillère (3), le rail présentant des moyens de liaison avec au moins un support d'appui (8), caractérisé en ce que le rail de guidage (1) est muni d'un pied en queue d'aronde (6) en une seule pièce qui est opposé diamétralement à la crémaillère (3), en ce que, sur le support d'appui (8) se trouvent deux patins de serrage (16, 20) enserrant le pied en queue d'aronde (6) et qui, dans la position non serrée, coulissent dans la direction longitudinale du rail et un boulon (24, 26) s'étendant transversalement par rapport à la direction longitudinale du rail pour la mise sous tension des patins de serrage (16, 20).

2. Rail de guidage selon la revendication 1, caractérisé en ce que l'un des patins de serrage (16) est relié de façon rigide à un support (14) faisant saillie par rapport au support d'appui (8) et en ce que l'autre patin de serrage (20), qui est libre, appuie contre une saillie (25) du support (14).

3. Rail de guidage selon la revendication 1 ou 2, caractérisé en ce que le support (14) est monté sur une tige cylindrique (35) du support d'appui (8) sur laquelle il coulisse axialement, pivote et peut être immobilisé sur celle-ci et en ce que la tige (35) s'étend transversalement par rapport à la direction longitudinale du rail de guidage (1).

4. Rail de guidage selon l'une des revendications 1 ou 2, caractérisé en ce qu'au moins une vis de calage (12) du support d'appui (8) peut être bloquée par une broche filetée (31) à partir de la partie supérieure du support d'appui (8).
